# EUROPEAN PATENT APPLICATION

(11) **EP 3 993 121 A1**
(43) Date of publication of application: **04.05.2022**
(21) Application number: 21203841.8
(22) Date of filing: 21.10.2021
(51) Int. Cl.: H01M 10/052, H01M 10/658, H01M 50/20, H01M 50/202, H01M 50/224, H01M 50/233, H01M 50/276, H01M 50/282, H01M 50/291, H01M 50/293, H01M 50/35, H01M 50/383, H01M 50/30, F42B 39/18, B65F 1/00, B65D 81/38

(54) **CONTAINER FOR THE TRANSPORT AND/OR STORAGE OF BATTERIES AND THE USE OF SUCH A CONTAINER**

(30) Priority: 02.11.2020 BE 202005787
(71) Applicant: Bebat VZW, 3300 Tienen (BE)
(72) Inventor: Hendrickx, Hendrik, 3300 Tienen (BE)
(74) Representative: Kamphuis, Albertus Johannes

(57) **Abstract**

Container (1) for the transport or storage of batteries, the container (1) having an internal storage space having a volume, the container (1) comprising walls (4, 11) surrounding the storage space on all sides, the container (1) having a lid (3) to close the storage space, wherein, in a state wherein the storage space is closed by the lid (3), the lid (3) constitutes a top wall of the storage space, wherein one or more of said walls (4,11) are provided with one or more openings (19) for venting gas under pressure from the storage space to the outside air, the one or more openings (19) having a total surface area of at least 1.0 square centimetre per litre volume of the storage space, wherein a layer of flame-retardant material (17) extends over the one or more openings (19), the flame-retardant material being made of steel fibres or mineral fibres.

## Description

The present invention concerns a container for the transport and/or storage of batteries or devices containing batteries and the use of such a container.

In particular, this concerns used batteries that are stored and transported for processing or recycling, and which may be defective or visibly or invisibly damaged.

Lithium batteries in particular can be potentially unstable, for example due to misuse or due to mechanical damage. They can spontaneously heat up, generating combustible gases that, of course, can be ignited by the reaction heat. These lithium batteries are rechargeable and non-rechargeable lithium batteries with different chemical compositions, each consisting of one or more coupled electrochemical cells.

As a result, such undesired spontaneous combustion can also result in a spontaneous combustion in an adjacent cell or battery. Such an event is better known in the art under the English term 'thermal run-away'.

Due to the increasing fraction of lithium batteries that need to be processed and/or recycled, the risk of a chain reaction due to an individual spontaneous combustion increases, such that closed containers, which are often necessary due to legal regulations regarding transport and storage of used batteries, may explode due to the generation and ignition of combustible gases.

Because the development of combustible gases takes place per battery cell, and transfer of heat between cells occurs relatively slowly, such ignition of a batch of batteries is a relatively slow process.

According to the state of the art, during transport, lithium batteries are surrounded by non-combustible and non-electrically conductive insulation, such that any spontaneous combustion cannot propagate and/or its consequences are limited. Such a known insulating material is vermiculite.

However, this has the disadvantages that vermiculite is expensive, that the correct placement of a battery surrounded by vermiculite must be done with care and therefore takes a lot of time, that the amount of batteries that can fit into a container is limited due to the space occupied by the vermiculite and that the vermiculite interferes with the further processing and recycling of the batteries.

In order to avoid or reduce these drawbacks, the invention concerns the use of a container for the storage or the transport of batteries, whether or not in an apparatus, in particular used batteries, the container having an internal storage space, wherein the storage space has a volume, the container comprising walls, the container having a lid to close the storage space, wherein, in a state wherein the storage space is closed by the lid, the lid constitutes a top wall of the storage space and the walls surround the storage space on all sides, wherein one or more walls are provided with one or more openings for venting gas from the storage space to the outside air, the one or more openings having a total surface area of at least 1.0, and preferably at least 1.2 square centimetre per litre volume of storage space.

This has the advantage that the gas that is released when a quantity of batteries in the storage room ignites, and that expands due to the heat of the combustion, can safely escape without reaching an internal pressure that could cause an explosion of the container or that could render the container useless.

As a result, no fire-resistant filler is required when transporting and storing used batteries, such that all its drawbacks are avoided.

In a preferred embodiment, the container is provided with a layer of flame-retardant material extending over the one or more openings.

This prevents flames, usually generated when batteries ignite, from passing through the openings outside the container and causing damage or igniting other objects.

In a preferred embodiment, the flame-retardant material is made of steel fibres or mineral fibres, and more preferably a mineral wool or a steel wool or a textile made of steel fibres or mineral fibres. This is a practical way of forming such a layer of flame-retardant material. Mineral wool is a collective name for glass wool and rock wool, wherein the rock wool can be based on various different types of minerals.

In a preferred embodiment, the flame-retardant material has a porosity which is at least 50 volume%, and preferably is at least 80 volume%, and more preferably is at least 90 volume%, and even more preferably is at least 95 volume%. As a result, the openings are not or hardly limited in their ability to allow gas to pass.

In a preferred embodiment, the layer of flame-retardant material extends parallel to said wall or walls in which the one or more openings are located, the layer of flame-retardant material having a thickness, i.e. a dimension in the direction perpendicular to said wall or walls, which is 40 mm or less, and preferably is 20 mm or less.

In a preferred embodiment, the layer of flame-retardant material has a mass that is at least 0.75 grams, and preferably at least 1.0 grams per litre of volume of the storage space. As a result, the flame-retardant material has sufficient capacity to absorb the heat of a flame, such as can arise when a batch of batteries is ignited, such that the flame is not only extinguished, but also such that the relevant gases have cooled down to such an extent that they do not re-ignite spontaneously and/or ignite other objects.

In a preferred embodiment, the flame-retardant material is made of fibres, wherein the average diameter of the fibres is at most 0.5 mm, and preferably at most 0.25 mm. This allows sufficient fibre surface to absorb the heat of a possible flame, such that that flame is extinguished.

In a preferred embodiment, the flame-retardant layer forms part of the one or more walls provided with the one or more openings.

In a preferred embodiment, one or more of the openings, and preferably all of the openings mentioned, are grouped into one or more groups, one group being provided with a common layer of flame-retardant material, such that the container can easily be manufactured.

In this case, the common layer of flame-retardant material also extends at the location of parts of the respective wall which are located between the one or more openings.

In a preferred embodiment, the one or more openings have an individual surface area that is at least 0.04 cm² This ensures that sufficient gas can be discharged. In a preferred embodiment, the one or more openings have an individual surface area that is at most 9 cm², preferably at most 5 cm², and more preferably at most 2 cm² such that individual batteries do not fit or are difficult to fit through the openings and thus cannot be ejected from the container in the event of a violent spontaneous combustion. Moreover, as a result, the mechanical strength of the container is not reduced too much by the presence of the openings.

In a preferred embodiment, the surface of the wall at the location of said group consists at least for 15 % of said openings.

In a preferred embodiment, the respective wall at the location of the one or more openings, in particular at the location of the one or more groups, is of a multilayer design with at least three layers, wherein a first layer and a second layer are formed by a first partial wall and a second partial wall, both provided with said one or more openings, wherein a third layer is formed by the layer of flame-retardant material, wherein the layer of flame-retardant material is arranged between the first layer and the second layer.

In a preferred embodiment, the lid is connected to the remainder of the container by means of one or more hinges.

In a preferred embodiment, the container is arranged to withstand an internal pressure without damage or permanent deformation and without opening the lid, of at least 15,000 Pa, and preferably at least 30,000 Pa, and more preferably at least 50,000 Pa above atmospheric pressure.

In a preferred embodiment, the one or more openings have a total surface area of at most 100 square centimetre per litre volume of the storage space and a total surface area that amounts to at most 50 % of the surface area of the wall or walls in which they are arranged, and a total surface area that amounts to at most 10 % of the combined surface area of all the aforementioned walls of the container. This is desirable in order not, or only to a limited extent, to reduce the mechanical strength of the container.

In a preferred embodiment, the one or more openings are at least partially, preferably substantially, and more preferably all, formed in the lid. This prevents them from being accidentally blocked by objects located right next to the container.

In this case, the lid is preferably provided with an upright ridge which at least partially and preferably completely surrounds said openings in the lid, in order to prevent rainwater falling on the lid from entering the storage space via the openings.

This upright ridge is preferably arranged at a distance of at least two centimetre from one or more, and more preferably all, edges of the lid.

In a preferred embodiment, the lid comprises a lid body in which the one or more openings are provided, wherein, in a state wherein the storage space is closed by the lid, the lid body constitutes a top wall of the storage space, wherein the lid is provided with a cover plate which is spaced from the lid body above the one or more openings. This prevents rainwater from falling onto the openings and entering the storage space.

When the lid is provided with said ridge, the cover plate is preferably located above said ridge, in order to even better prevent water from entering the storage space via the openings.

On at least part of the edges of the cover plate one or more passages are provided between the lid body and the cover plate. The total surface area of these passages is preferably greater than the total surface area of said one or more openings. As a result, the cover plate cannot block the discharge of gases when batteries ignite in the storage space.

In a preferred embodiment, the lid is provided with a seal for sealing a gap between the lid and the remainder of the container when the lid closes the storage space. Preferably, the seal is fire resistant to a temperature of 350°C or more, and preferably to a temperature of 500°C or more, such that the seal is not damaged when a batch of batteries ignites.

Preferably, the seal is made of a fire-resistant sealing cord. This is a practical way of manufacturing such a seal.

In a preferred embodiment, the storage space contains one or more used batteries, wherein the storage space is closed by the lid. Preferably, the storage space is filled for at least 25 % by volume, and more preferably for at least 40 % by volume, with used batteries, including lithium batteries.

In a preferred embodiment, the storage space is an open storage space free of internal walls and the storage space is free of fire-retardant material.

In a preferred embodiment, the storage space contains less than 1 volume% of solid materials other than batteries.

In a preferred embodiment, there are at least ten batteries in the storage space.

In a preferred embodiment, the container is an ASP container.

Preferably, the volume of the storage space is 10 L or more, more preferably 25 L or more, and even more preferably 50 L or more.

In a preferred embodiment, the container is made of steel.

Preferably, during use, the storage space of the container is at least partially filled with batteries, preferably used batteries, and the storage space is closed by the lid.
The amount of batteries is preferably at least 0.1 kg per litre of volume of the storage space. In this case, the batteries preferably comprise one or more lithium batteries.

Another aspect of the invention concerns said container.

In order to clarify the invention, a preferred embodiment of a container according to the invention is described below, with reference to the following figures, wherein
Figure 1 shows a perspective view of a container according to the invention;
Figure 2 shows a perspective view of a component of the container of Figure 1;
Figure 3 shows the same component as Figure 3, with a part cut away;
Figure 4 is an exploded perspective view of the component of Figure 2; and
Figure 5 shows a part of a portion of the component of Figures 2 to 4 in a plan view and on a larger scale.

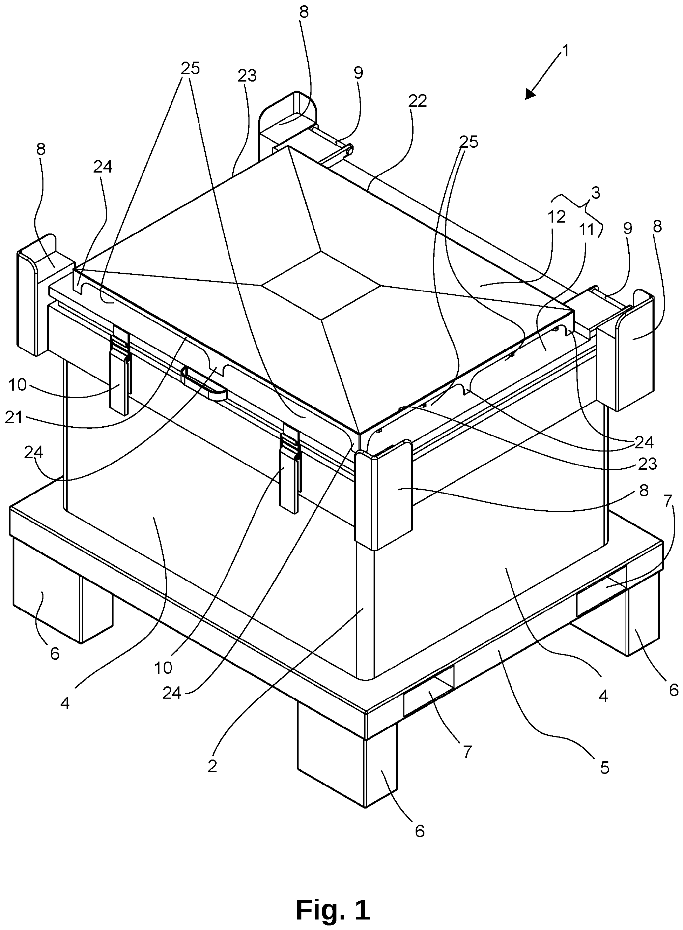

The container 1 of Figure 1 is a so-called ASP container. The container 1 mainly consists of a base part 2 and a lid 3. The container 1 is made of galvanised steel, with the exception of the components indicated below as being made of a different material.

The base part 2 has four closed side walls 4 and a closed bottom wall, of which two closed side walls 4 are visible in the figure, and has an internal storage space defined by the side walls 4 and the bottom wall. The storage space has a volume of approximately 520 L.

The base part 2 is provided on its bottom side with a chassis 5 with legs 6 and with spaces 7 to provide access for the forks of a forklift truck. The base part 2 is provided on its top side with guides 8 in order to provide space for the legs 6 of another identical container 1 such that the containers 1 can be stacked.

The lid 3 is hingedly connected to the base part 2 by means of hinges 9, such that the lid 3 can open and close, and is provided with locks 10 to lock the lid 3 in a closed state, as shown in Figure 1.

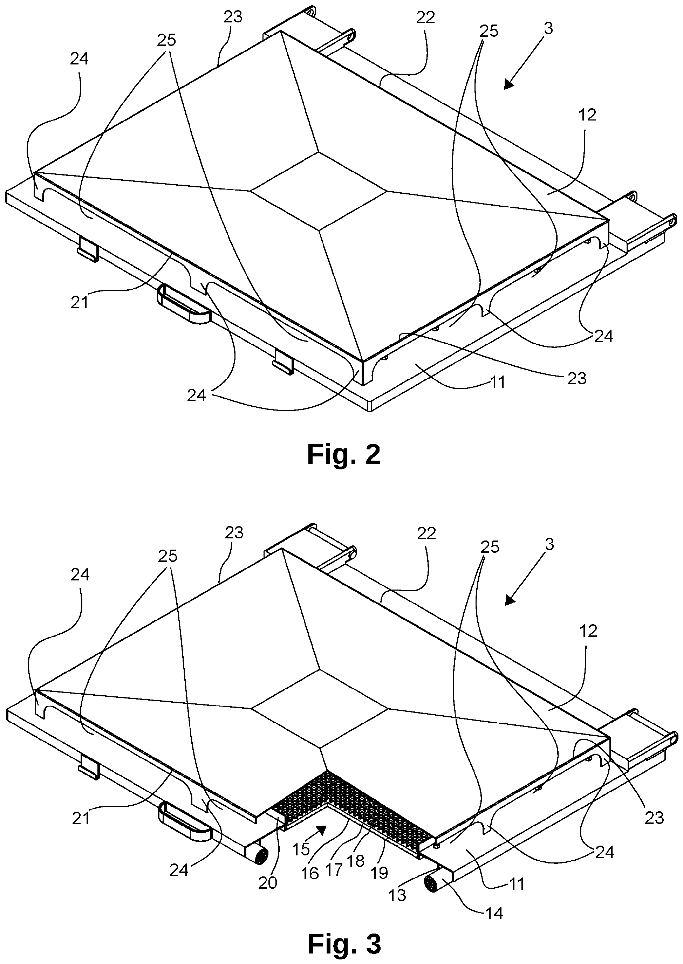

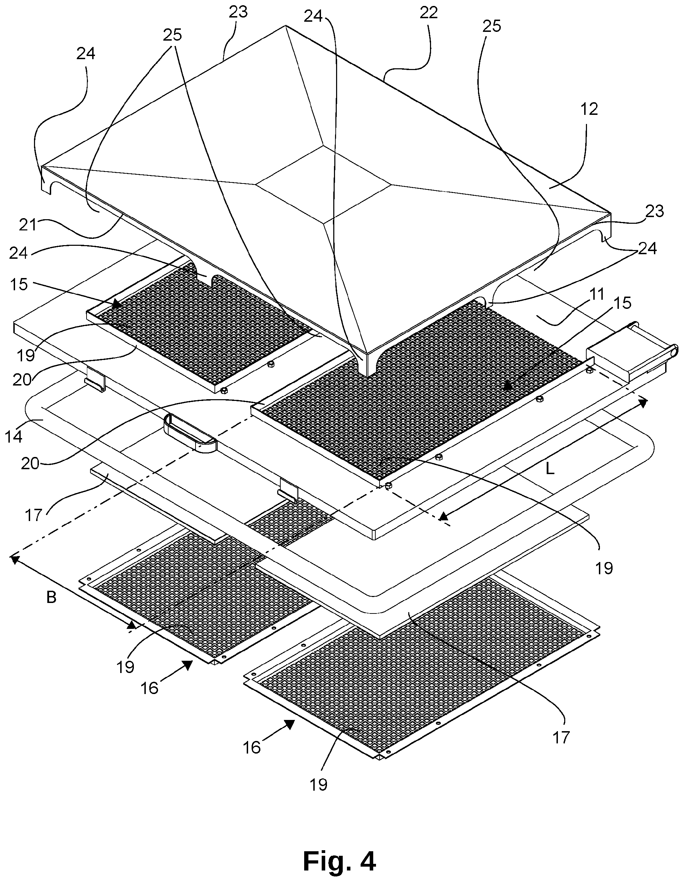

The lid 3 is shown in more detail in Figures 2 to 5.

The lid 3 mainly consists of a lid body 11 and a cover plate 12 which is mounted on top of the lid body 11. In said closed state, the lid body 11 forms the top wall of the storage space.

The lid body 11 is provided on its bottom side with a groove 13 which provides space for a seal. The seal is formed by a length of fire-resistant sealing cord 14 which can withstand a temperature of 750°C, the ends of which are joined together to form a closed ring.

In the lid body 11, two rectangular recesses 15 are provided, each having a width B of 362 mm and a length L of 605 mm.

In each of the recesses 15, a multi-layer structure is provided, consisting of a perforated lower steel plate 16 of 2.5 mm thickness, a layer of steel wool 17 with a thickness of 10 mm, made of stainless steel i.e. inox, and a perforated upper steel plate 18 of 2.5 mm thick. The lower steel plate 16 and the upper steel plate 18 form partial walls of the lid body 11, which provide mechanical strength to the lid body 11 and which keep the layer of steel wool 17 in the desired position.

The lower steel plate 16 and the upper steel plate 18 are provided over their entire surface area with a regular pattern of openings 19, the openings 19 being square with a side Z of 10 mm and spaced apart by a distance A of 4 mm, with other words, have partition walls with a width of 4 mm.

Therefore, the lower steel plate 16 and the upper steel plate 18 have a permeability of 51 %, which corresponds to (10 mm / (10+4) mm)²

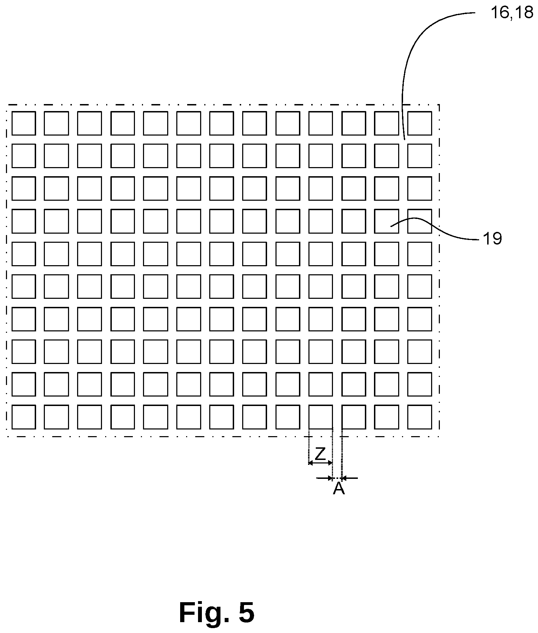

The structure of the openings 19 is shown in Figure 5.

When the lid 3 is closed, the openings 19 in the lower steel plate 16 are located exactly below the openings 19 in the upper steel plate 18.

The openings 19 have a total passage area of 2 * 362 mm * 605 mm * 51 %, which corresponds to 2234 cm².

The steel wool is made of fibres with an average diameter of 30 µm. The layer of steel wool 17 has a mass of 1,200 g/m² at the mentioned thickness of 10 mm, and a free volume between the fibres of 98.5 volume%. The total mass of steel wool was 526 grams.

An upright ridge 20 with a height of 2 cm is arranged on three sides around each of the recesses 15.

The cover plate 12 is shaped like a truncated pyramid with a very low height. The cover plate 12 has a front edge 21, which faces the closures 10, a rear edge 22, which faces the hinges 9, and two side edges 23. The edges 21, 22, 23 of the cover plate 12 are spaced 6 cm from the lid body 11 and the centre of the cover plate 12 is spaced 7.6 cm from the lid body.

At the corners between the front edge 21 and both side edges 23, and in the middle of the side edges 23, the cover plate 12 is provided with spacers 24 through which there are passages 25 between the lid body 11 and the cover plate 12. The total area of these passages 25 is approximately 850 cm². This is less than the surface area of the openings 19. The reason for this is that it has been found that the smoke released during a battery fire is deposited on the layer of flame-retardant material 17, as a result of which its permeability can decrease significantly during a fire.

At the rear edge 22, which is not visible in the figures, the cover plate 12 is provided with a complete, downwardly extending rear wall of 6 cm height which is welded to the lid body 11, such that there are no passages 25 at the location of the rear edge 22 between the lid body 11 and the cover plate 12.

The cover plate 12 prevents rainwater from entering the storage space via the openings 19.

Because said rear wall of the cover plate 12 is welded against the raised edge 20, an upright ridge is obtained which runs completely around each recess 15 and which is formed partly by said rear wall and partly by said upright edge and which prevents water, located on the lid body 11, from entering the openings 19.

The container 1 is designed such that the container 1 can withstand an internal pressure of 132,000 Pa above atmospheric pressure without damage and without the lid 3 opening.

The container 1 has been tested with a content of 400 kg lithium batteries that were ignited by heating. Temperatures were measured internally in the container 1 that varied from 500 °C to 700 °C, depending on location and point in time.

The hot burning reaction gas that is generated during such an ignition could flow out quickly through the openings 19 more than sufficiently, such that no damage occurred to the container 1. This hot gas flowed through the layer of steel wool 17 and was thereby cooled, such that the flames were extinguished by cooling and no flames emerged outside the container 1. The temperature of the reaction gas escaping via the openings 19 did not exceed 215°C. The layer of steel wool 17 thus acts as a flame-retardant layer for the burning reaction gas. The maximum pressure measured internally was 15,000 Pa above atmospheric pressure.

Due to the seal 14, no gas could escape from the container 1 via a route other than the openings 19. This means that all the gas was vented through the openings 19, which are provided with the flame-retardant layer 17, such that also along the transition between the base part 2 and the lid 3, no flames could escape from the container 1.

As a result, this container 1 is eminently suitable for the safe transport of used batteries on a road vehicle or a rail vehicle and the safe storage of used batteries, because no explosion of the container 1 will occur and because no flames escape the container 1.

## Claims

1. Container (1) for the transport and/or the storage of batteries, the container (1) having an internal storage space, the storage space having a volume, the container (1) comprising walls (4, 11) surrounding the storage space on all sides, the container (1) having a lid (3) to close the storage space, wherein, in a state wherein the storage space is closed by the lid (3), the lid (3) constitutes a top wall of the storage space, wherein one or more of said walls (4,11) are provided with one or more openings (19) for venting gas under pressure from the storage space to the outside air, the one or more openings (19) having a total area of at least 1.0 square centimetre per litre volume of the storage space, wherein a layer of flame-retardant material (17) extends over the one or more openings (19), the flame-retardant material being made of steel fibres or mineral fibres.

2. Container (1) according to claim 1, **characterised in that** the layer of flame-retardant material (17) has a mass that is at least 0.75 grams per litre of volume of the storage space, the average diameter of the steel fibres or mineral fibres being at most 0.5 mm.

3. Container (1) according to any one of the preceding claims, **characterised in that** the flame-retardant material is a mineral wool or a steel wool or is a textile made of steel fibres or mineral fibres.

4. Container (1) according to any one of the preceding claims, **characterised in that** the flame-retardant material has a porosity of at least 50 % by volume.

5. Container (1) according to any one of the preceding claims, **characterised in that** one or more of said openings (19) are grouped into one or more groups, the layer of flame-retardant material being a common layer extending over said openings (19) in a group, wherein the one or more openings (19) have an individual area ranging between 0.04 cm² and 9 cm², wherein at least 15% of the surface area of the wall at the location of a said group consists of said openings.

6. Container (1) according to any one of the preceding claims, **characterised in that** the respective one or more walls (4,11) at the location of the one or more openings (19) is multi-layered with at least three layers, wherein a first layer (16) and a second layer (18) are both provided with said one or more openings (19), wherein a third layer is formed by the layer of flame-retardant material (17), wherein the layer of flame-retardant material (17) is arranged between the first layer (16) and the second layer (18).

7. Container (1) according to any one of the preceding claims, **characterised in that** the container (1) is designed to withstand an internal pressure of at least 15,000 Pa above atmospheric pressure.

8. Container (1) according to any one of the preceding claims, **characterised in that** the one or more openings (19) are provided in the lid (3), the lid (3) being provided with an upright ridge (20) which surrounds said openings (19) in the lid (3).

9. Container (1) according to any one of the preceding claims, **characterised in that** the lid (3) comprises a lid body (11) in which the one or more openings (19) are provided, and comprises a cover plate (12) spaced apart from the lid body (11) above the one or more openings (19).

10. Container (1) according to claim 9, **characterised in that** one or more passages are provided between the lid body and the cover plate at at least a part of the edges of the cover plate.

11. Container (1) according to claim 10, **characterised in that** the total area of the passages is greater than the total area of said one or more openings.

12. Container (1) according to any one of the preceding claims, **characterised in that** the lid (3) is provided with a seal for sealing a gap between the lid (3) and the remainder of the container (1), wherein the seal is made of a fire-resistant sealing cord (14).

13. Container (1) according to any one of the preceding claims, **characterised in that** the volume of the storage space is 10 litres or more.

14. Use, for the storage or transport of batteries, of a container (1), the container (1) having an internal storage space, the storage space having a volume, the container (1) comprising walls (4, 11) surrounding the storage space on all sides, the container (1) having a lid (3) to close the storage space, wherein, in a state wherein the storage space is closed by the lid (3), the lid (3) constitutes a top wall of the storage space, **characterised in that** one or more of said walls (4, 11) are provided with one or more openings (19) for venting gas under pressure from the storage space to the outside air, the one or more openings (19) having a total area of at least 1.0 square centimetre per litre volume of the storage space.

15. Use according to claim 14, **characterised in that** the container (1) is a container according to any one of claims 1 to 13.
